# EUROPÄISCHE PATENTSCHRIFT

(11) **EP 1 046 030 B1**
(45) Veröffentlichungstag und Bekanntmachung des Hinweises auf die Patenterteilung: **04.09.2002**
(21) Anmeldenummer: 99971917.2
(22) Anmeldetag: 28.10.1999
(51) Int. Cl.: G01N 27/22

(54) **ANORDNUNG ZUR FEUCHTEMESSUNG**
SYSTEM FOR MEASURING HUMIDITY
SYSTEME DE MESURE DE L'HUMIDITE

(30) Priorität: 06.11.1998 AT 72498
(43) Veröffentlichungstag der Anmeldung: 25.10.2000
(73) Patentinhaber: E+E Elektronik Ges. Mbh, 4210 Engerwitzdorf (AT)
(72) Erfinder: MITTER, Helmut, A-4202 Hellmonsödt (AT); WAGNER, Dieter, A-4040 Linz (AT); HARTL, Josef, A-4040 Linz (AT)
(74) Vertreter: Hofmann, Ernst
(86) Internationale Anmeldenummer: EP9908165
(87) Internationale Veröffentlichungsnummer: WO00028311

(56) Entgegenhaltungen:
- WO-A-98/27411
- DE-A- 3 924 634
- JP-A- 61 235 745
- US-A- 3 914 982
- US-A- 5 345 821
- US-A- 5 388 443

## Beschreibung

Die vorliegende Erfindung betrifft eine Anordnung zur Feuchtemessung gemäß dem Oberbegriff des Anspruches 1.

Es sind Anordnungen zur Feuchtemessung bekannt, bei denen eine Sensoreinheit mit einem feuchteempfindlichen Sensorelement auf einem flachen Trägerelement angeordnet wird. Beim Trägerelement kann es sich beispielsweise um eine Leiterplatte oder eine Platine handeln. Die erforderliche elektrische Kontaktierung zwischen auf der Leiterplatte angeordneten elektrischen Bauelementen zur Signalerzeugung und -verarbeitung und der Sensoreinheit bzw. dem eigentlichen feuchteempfindlichen Sensorelement kann hierbei über Bonddrähte und entsprechende Lötverbindungen erfolgen. Alternativ ist die Kontaktierung auch über Anschlußdrähte an der Sensoreinheit möglich, die in geeignete Kontaktierungsbohrungen auf Seiten des Trägerelementes gesteckt und auf der anderen Seite der Leiterplatte verlötet werden. Derartige Kontaktierungsvarianten erfordern jedoch einen hohen fertigungstechnischen Aufwand, der sich insbesondere bei der Massenfertigung negativ bemerkbar macht. Eine automatisierte Bestückung von Leiterplatten mit derartigen Sensoreinheiten zur Feuchtemessung ist über diese Kontaktierungsmethoden nicht oder nur erschwert möglich.

Aus der WO 98/27411 ist eine gattungsgemäße Anordnung bekannt, bei der z.B. ein Sensor in Form eines Feuchtesensors mit seiner feuchteempfindlichen Sensorfläche oberhalb der Ausnehmung eines geeigneten Trägessubstrates angeordnet wird. Die elektrische Kontaktierung des Sensorelementes erfolgt über die Flip-Chip-Technologie. Als nachteilig erweist sich an der vorgeschlagenen Vorrichtung, daß im Fall der Verwendung bestimmter Trägersubstrat-Materialien eine Verfälschung von Feuchtemeßwerten resultieren kann.

Aufgabe der vorliegenden Erfindung ist es daher, eine Anordnung zur Feuchtemessung zu schaffen, die eine weitgehend automatisierte Fertigung derartiger Anordnungen ermöglicht. Insbesondere ist eine möglichst einfache elektrische Kontaktierung der dabei eingesetzten Bauelemente gefordert. Ferner sollen die Feuchtemeßwerte möglichst nicht durch die Ausbildung der Anordnung verfälscht werden.

Diese Aufgabe wird gelöst durch eine Anordnung mit den Merkmalen im kennzeichnenden Teil des Anspruches 1.

Vorteilhafte Ausführungsformen der erfindungsgemäßen Anordnung ergeben sich aus den Maßnahmen in den abhängigen Ansprüchen.

Die erfindungsgemäßen Maßnahmen gestatten nunmehr die automatische Bestückung von Leiterplatten, Platinen oder anderen Trägerelementen mit feuchteempfindlichen Sensoreinheiten, da die Sensoreinheiten als SMDs (Surface Mounted Devices) ausgebildet sind. Hierbei werden die Sensoreinheiten automatisiert über SMD-Bestückungsautomaten auf die vorgesehenen Positionenen der erfindungsgemäß ausgebildeten Trägerelemente gesetzt und dort befestigt sowie elektrisch kontaktiert. Die Komplett- bzw. Simultankontaktierung der Sensoreinheit kann etwa durch Verlöten oder aber Befestigen mittels Leitkleber erfolgen. Es resultiert im Vergleich zur manuellen Einzel-Kontaktierung bzw. Bestückung durch die nunmehr mögliche Flip-Chip-Technik eine deutliche Reduzierung der erforderlichen Verfahrensschritte.

Die in den abhängigen Ansprüchen angegebenen Maßnahmen im Zusammenhang mit der Beschichtung des Trägerelementes gewährleisten desweiteren ein störungsfreies Funktionieren der erfindungsgemäßen Anordnung im Meßbetrieb, da damit die eventuelle Ausbildung eines verfälschenden Mikroklimas in der Nähe der Sensoreinheit verhindert werden kann.

Grundsätzlich existieren verschiedenste Ausführungsmöglichkeiten für die jeweilige feuchteempfindliche Sensoreinheit im Rahmen der vorliegenden Erfindung, d.h. die nachfolgend beschriebenen Maßnahmen lassen sich selbstverständlich an verschiedenste Gegegebenheiten anpassen. So sind sowohl kapazitive Varianten wie auch resistive Varianten einer Feuchtemeßanordnung erfindungsgemäß realisierbar.

Weitere Vorteile sowie Einzelheiten der erfindungsgemäßen Anordnung ergeben sich aus der nachfolgenden Beschreibung eines Ausführungsbeispieles anhand der beiliegenden Zeichnungen.

Dabei zeigt
- Figur 1: eine Draufsicht auf ein Ausführungsbeispiel der erfindungsgemäßen Anordnung;
- Figur 2: eine Schnittansicht des Ausführungsbeispieles der Figur 1;
- Figur 3: eine Draufsicht auf das verwendete feuchteempfindliche Sensorelement des Ausführungsbeispieles der Figur 1;
- Figur 4: eine Schnittansicht des Sensorelementes aus Figur 3.

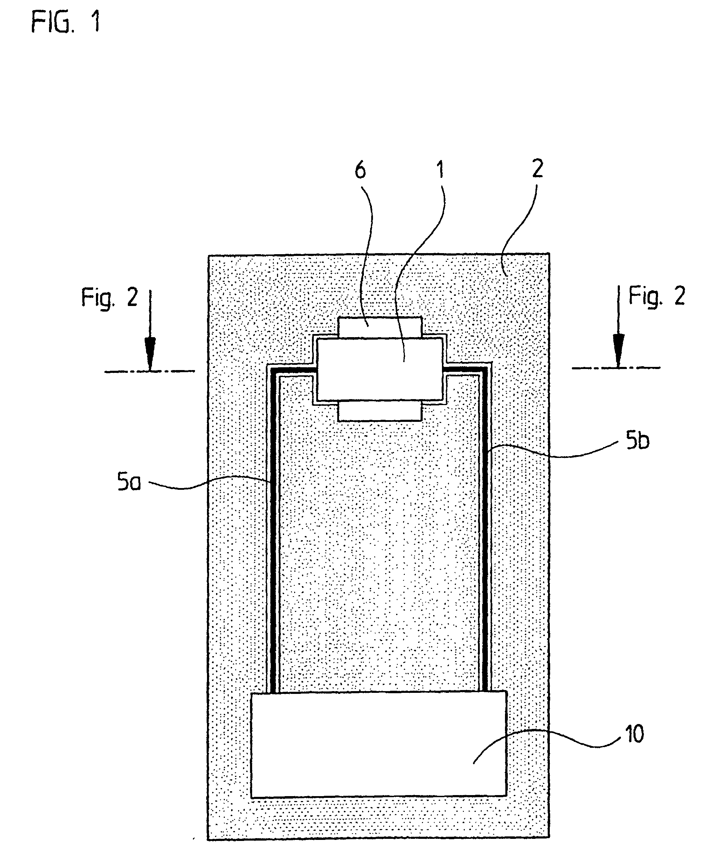

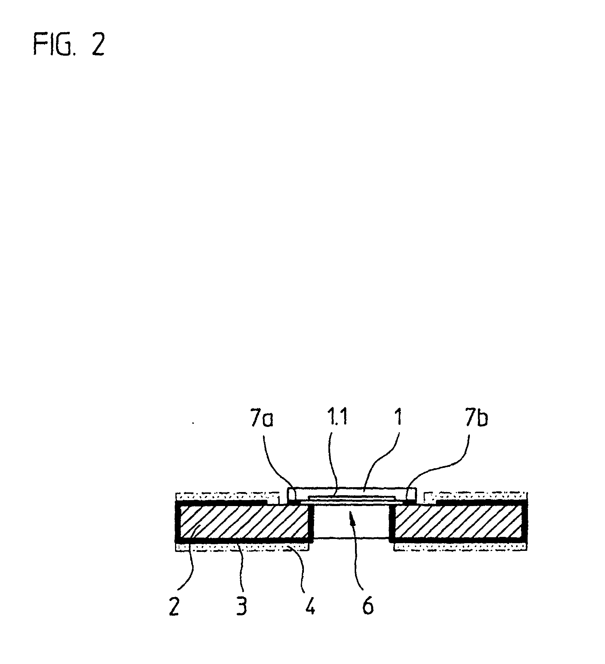

Anhand der Figuren 1 und 2 sei nachfolgend ein Ausführungsbeispiel der erfindungsgemäßen Anordnung beschrieben. In Figur 1 ist eine Draufsicht auf die Anordnung zur Feuchtemessung in schematischer Form dargestellt; Figur 2 zeigt eine Schnittansicht durch die Anordnung.

Die dargestellte Anordnung umfaßt ein Trägerelement 2, vorzugsweise ausgebildet als ein- oder mehrlagige Leiterplatte mit darauf angeordneten bzw. darin integrierten elektrischen Leiterbahnen 5a, 5b, elektrischen Bauelementen etc.. Beim Leiterplattenmaterial kann es sich beispielsweise um glasfaserverstärkte Epoxidharze handeln, wie z.B. das bekannte Standard-Leiterplattenmaterial FR4.
Auf dem Trägerelement 2 ist nunmehr in der sog. Flip-Chip-Technik eine Sensoreinheit 1 angeordnet, welche u.a. ein feuchteempfindliches Sensorelement 1.1 enthält. Das Sensorelement 1.1 ist in bekannter Art und Weise ausgebildet und verändert in Abhängigkeit der jeweiligen Feuchte eine elektrische Kenngröße. Im Fall eines resistiven Feuchtesensor-Anordnung handelt es sich dabei um den feuchteabhängigen elektrischen Widerstand eines geeigneten Sensorelementes 1.1, im Fall einer kapazitiven Feuchtesensor-Anordnung verändert sich feuchteabhängig die gemessene Kapazität eines entsprechenden Sensorelementes 1.1. Vorzugsweise ist das Sensorelement 1.1 in der Sensoreinheit 1 hierbei als dünne Schicht bzw. Dünnschichtsensor ausgebildet, wie dies etwa im Kapitel 20.4 im Lehrbuch "Sensortechnik", H.-R. Tränkler, E. Obermeier, Springer-Verlag 1998 auf den Seiten 1245 - 1250 beschrieben ist. Zu weiteren Details in Bezug auf ein bevorzugtes Ausführungsbeispiel der Sensoreinheit 1 bzw. des Sensorelementes 1.1 sei auf die Beschreibung der nachfolgenden Figuren verwiesen. In Figur 2 ist der Aufbau der Sensoreinheit 1 lediglich schematisch skizziert.

Das feuchtempfindliche Sensorelement 1.1 ist auf der Unterseite der Sensoreinheit 1 angeordnet, d.h. auf derjenigen Seite der Sensoreinheit 1, die dem Trägerelement 2 zugewandt ist. Um sicherzustellen, daß das feuchteempfindliche Sensorelement 1.1 mit der jeweiligen Umgebung in Wechselwirkung treten kann, d.h. daß beispielsweise die Umgebungsfeuchte eine Kapazitätsänderung im Sensorelement 1.1 bewirkt, ist erfindungsgemäß vorgesehen, daß das Trägerelement 2 mindestens eine Ausnehmung 6 im Bereich aufweist, in dem die Sensoreinheit 1 angeordnet wird. Oberhalb der Ausnehmung 6 ist die Sensoreinheit 1 angeordnet, wobei das feuchteempfindliche Sensorelement 1.1 der Sensoreinheit 1 in Richtung der Ausnehmung 6 orientiert angeordnet ist. Im Fall eines als dünne Schicht ausgebildeten Sensorelementes 1.1, die als Dielektrikum in einer kapazitiven Meßanordnung fungiert, ist die Schichtoberfläche der Ausnehmung 6 zugewandt.

Dies kann vorzugsweise derart erfolgen, daß die Schichtebene in der Ausnehmung 6 oder aber parallel benachbart zur Ebene der Ausnehmung 6 angeordnet wird.

Grundsätzlich sind auch andere Anordnungsvarianten denkbar; entscheidend ist lediglich, daß die Relativanordnung des feuchtempfindlichen Sensorelementes in Bezug auf die Ausnehmung derart vorgesehen wird, daß ein Feuchteaustausch zwischen dem Sensorelement und der Umgebung möglichst ungestört erfolgen kann.

Die Ausnehmung 6 ist im dargestellten Ausführungsbeispiel etwas größer als die entsprechende Grundfläche der Sensoreinheit 1 bzw. des Sensorelementes 1.1 gewählt worden, die dem Trägerelement 2 zugewandt ist. Dies bewirkt eine vorteilhafte Umströmung der kompletten Sensoreinheit 1 mit der zu messenden Luft und damit einen verbesserten Feuchteaustausch mit dem Sensorelement 1.1.

Zur erforderlichen elektrischen Kontaktierung der Sensoreinheit 1 bzw. des feuchteempfindlichen Sensorelementes 1.1 ist erfindungsgemäß ferner vorgesehen, alle Kontaktierungsbereiche bzw. Kontaktpads des Sensorelementes 1.1 bzw. der Sensoreinheit 1 auf derjenigen Seite anzuordnen, die dem Trägerelement 2 zugeordnet ist. Auf diese Art und Weise ist ein sog. Flip-Chip-Bonding der Sensoreinheit 1 auf dem Trägerelement 2 möglich. Zu weiteren Details und Vorzügen dieser Kontaktierungstechnik sei beispielsweise auf das Kapitel 6.6.2.2; Seite 277 - 278 im Lehrbuch "Sensortechnik", H.-R. Tränkler, E. Obermeier, Springer-Verlag 1998 verwiesen.
Im dargestellten Ausführungsbeispiel der Figuren 1 und 2 sind die Kontaktierungsbereiche bzw. Kontaktpads des Sensorelementes 1.1 demzufolge auf der Unterseite der Sensoreinheit 1 angeordnet. Die Kontaktierungsbereiche des Sensorelementes 1.1 werden mit Hilfe von Kontaktierungselementen 7a, 7b mit den Kontaktierungsbereichen auf dem Trägerelement 2 elektrisch leitend verbunden.

Im Zusammenhang mit der gewählten elektrischen Kontaktierung existieren numehr verschiedene Möglichkeiten. So können in einer bevorzugten Ausführungsform auf den Kontaktierungsbereichen des Trägerelementes 2 die Kontaktierungselemente in Form einer geeigneten Lotpaste aufgebracht werden. Die Sensoreinheit 1wird anschließend auf dem korrekten Platz auf dem Trägerelement 2 positioniert. Die eigentliche Kontaktierung erfolgt dann in bekannter Art und Weise durch Tempern der gesamten Anordnung im Reflow-Ofen.
Alternativ hierzu kann es sich bei den Kontaktierungselementen 7a, 7b zwischen den sensor- und trägerseitigen Kontaktierungsbereichen auch um sog. "Bumps" oder Höcker, bestehend aus elektrisch leitfähigem Lötmaterial oder aber aus Leitkleber. Neben der elektrischen Kontaktierung gewährleisten die Kontaktierungselemente 7a, 7b noch die Befestigung der Sensoreinheit 1 auf dem Trägerelement 2.

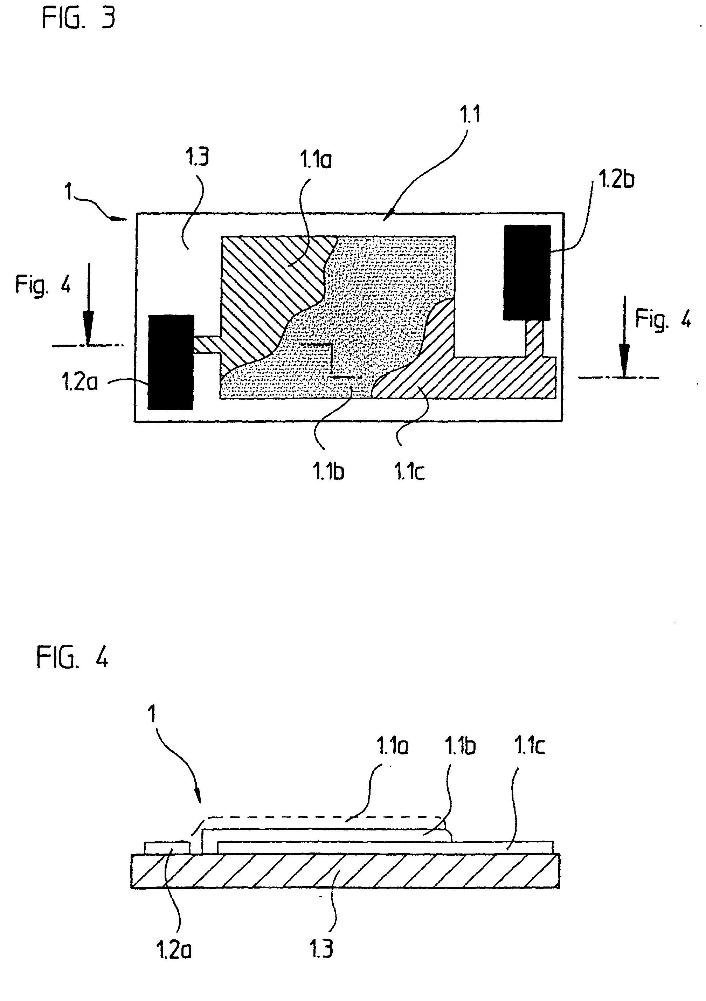

Auf diese Art und Weise werden demzufolge die beiden Elektroden einer kapazitiven Feuchtemeßanordnung elektrisch leitend kontaktiert; zwischen den beiden Elektroden ist das eigentliche Sensorelement 1.1 als aktive Schicht angeordnet, deren Kapazität sich feuchteabhängig aufgrund der Wasseradsorption ändert. Zum detaillierten Aufbau eines Ausführungsbeispieles der Sensoreinheit 1 sei auf die Figuren 3 und 4 verwiesen.

Die auf dem Trägerelement 2 vorgesehenen Kontaktierungsbereiche wiederum sind mit zwei Leiterbahnen 5a, 5b verbunden, die damit die Sensoreinheit 1 mit einer schematisch angedeuteten Elektronik-Einheit 10 verbinden. Die Elektronikeinheit 10 enthält weitere elektrische Bauelemente zur Signalerzeugung und/oder Signalverarbeitung. Hierbei kann es sich etwa um Widerstände, Kondensatoren, Komparatoren, Operationsverstärker sowie ggf. Mikroprozessoren handeln etc..

Um sicherzustellen, daß bei der Feuchtemessung mit Hilfe der Sensoreinheit 1 auf dem Trägerelement 2 keine Verfälschung der Meßwerte aufgrund des gewählten Trägerelementmateriales auftritt, sind eine Reihe weiterer Maßnahmen vorgesehen. Diese sind insbesondere dann zu ergreifen, wenn ein Material für das Trägerelement 2 gewählt wird, das eine starke Feuchteaufnahme bzw. -abgabe zeigt. Im Fall des Leiterplattenmateriales FR4 würde ansonsten sich ein Mikroklima in der Umgebung der Sensoreinheit 1 ausbilden, das zu Fehlmessungen führen kann.
Aus diesem Grund ist im dargestellten Ausführungsbeispiel der erfindungsgemäßen Anordnung vorgesehen, das Trägerelement 2 mit einer nahezu vollständigen Beschichtung 3 zu versehen. Hierzu wird das Trägerelement 2 bzw. die Leiterplatte nahezu ganzflächig mit einer Beschichtung 3 aus Kupfer versehen. Die Beschichtung 3 wird hierbei im Ausführungsbeispiel der Figur 2 auch an den Rändern bzw. Kanten des Trägerelementes 2 vorgesehen. Ebenso sei darauf hingewiesen, daß im Bereich der Ausnehmung 6, in der das Sensorelement 1.1 angeordnet ist, die Innenränder der Ausnehmung 6 mit der Beschichtung 3 versehen sind.
Zumindest im unmittelbaren Umgebungsbereich der Sensoreinheit 1 ist demzufolge eine derartige nahezu vollständige Beschichtung des Trägerelementes 2 mit einem geeigneten Beschichtungsmaterial vorzunehmen, um dort die Ausbildung eines verfälschenden Mikroklimas zu verhindern. Das jeweilige Beschichtungsmaterial hat dabei im wesentlichen die Funktion, die unerwünschte Feuchteaufnahme und/oder -abgabe durch das jeweilige Trägerelementmaterial zu verhindern.
Alternativ oder zusätzlich zu Kupfer wären als Beschichtungsmaterial etwa auch andere Materialien einsetzbar. So könnte zusätzlich oder alternativ zu einer Kupfer-Beschichtung auch jeweils eine Nickelbeschichtung, eine Goldbeschichtung oder aber eine Zinnbeschichtung vorgesehen werden.

Die Beschichtung 3 ist hierbei selbstverständlich nicht im Bereich der Kontaktierungsbereiche des Trägerelementes 2 aufgebracht, wo die Kontaktierungselemente 7a, 7b angeordnet sind, was in Figur 2 angedeutet ist. Wie desweiteren in Figur 1 ersichtlich ist, wird ferner unmittelbar benachbart zu den Leiterbahnen 5a, 5b auf dem Trägerelement 2 keine derartige Beschichtung vorgesehen, um die Leiterbahnen 5a, 5b von der Kupfer-Beschichtung zu isolieren. In einer vorteilhaften Ausführungsform sind die Leiterbahnen ebenfalls aus Kupfer, d.h. dem jeweiligen Beschichtungsmaterial, so daß nach der ganzflächigen Beschichtung des Trägerelementes 2 mit Kupfer durch geeignete Strukturierungsmaßnahmen die erforderlichen Leiterbahnen hergestellt werden können. Dies kann etwa in bekannter Art und Weise durch einen Ätzprozess erfolgen.

Wie aus der Schnittansicht in Figur 2 desweiteren erkennbar, ist die Beschichtung 3 des Trägerelementes 2 ferner nahezu ganzflächig mit einer weiteren, zweiten Beschichtung 4 in Form eines Lötstoplackes versehen. Lediglich bei den Kontaktierungsbereichen des Trägerelementes 2, wo die elektrische Kontaktierung der Sensoreinheit 1 erfolgt, ist auch keine zweite Beschichtung 4 vorgesehen. In Bezug auf die Wahl eines geeigneten Lötstoplackes ist anzuführen, daß auch hierfür ein Material gewählt wird, das wiederum eine möglichst geringe Feuchteaufnahme und -abgabe zeigt, damit sich kein störendes, meßwertverfälschendes Mikroklima im Bereich der Sensoreinheit 1 ausbildet. Besonders geeignet hierzu sind etwa Lötstoplacke, die weniger als 2% Feuchte aufehmen.

Anhand der Figuren 3 und 4 sei nachfolgend die Sensoreinheit 1 des Ausführungsbeispieles beschrieben. Hierbei zeigt Figur 3 die Unterseite der Sensoreinheit 1, die dem Trägerelement 2 zugewandt ist; in Figur 4 ist eine detaillierte Schnittdarstellung durch die Sensoreinheit 1.

Die Sensoreinheit 1 besteht im gezeigten Ausführungsbeispiel einer kapazitiven Meßanordnung aus einem Trägersubstrat 1.3 aus Glas, auf dem das eigentliche feuchtempfindliche Sensorelement 1.1 sowie die Kontaktierungsbereiche 1.2a, 1.2b angeordnet sind. Das in Dünnschichttechnik ausgebildete Sensorelement 1.1 wiederum besteht aus einer flächigen, metallischen Grundelektrode 1.1c, die unmittelbar auf dem Trägersubstrat 1.3 angeordnet ist, einer darüber angeordneten feuchteempfindlichen Potymerschicht 1.1b sowie einer wiederum darüber angeordneten feuchtedurchlässigen Deckelektrode 1.1a. Die Polymerschicht 1.1b zwischen den beiden Elektroden 1.1a, 1.1c fungiert als Dielektrikum, verändert in Abhängigkeit der jeweiligen Feuchte ihre Kapazität und dient damit in bekannter Art und Weise zur kapazitiven Bestimmung der Umgebungsfeuchte. Als geeignetes Material für die Polymerschicht 1.1b kommt z.B. Polyyimid in Betracht.
Die beiden Elektroden 1.1a, 1.1c sind zur Kontaktierung mit den beiden Kontaktierungsbereichen 1.2a, 1.2b bzw. Kontaktierungspads verbunden, über die die Elektroden 1.1a, 1.1c mit der in Figur 1 angedeuteten Elektronikeinheit 10 oder anderen Bauelementen verbunden werden.
Eine typische Dicke des Glas-Trägersubstrates liegt im Bereich von 500 - 600µm; die Dicke der darüber angeordneten Schichten 1.1a, 1.1b, 1.1c liegt typischerweise im Bereich von 2 - 3µm.

Diese Variante einer Sensoreinheit stellt selbstverständlich nur eine mögliche Ausführungsform innerhalb der vorliegenden Erfindung dar. Es können demzufolge auch andere Sensoreinheiten zur Feuchtemessung eingesetzt werden, bei denen das jeweilige feuchteempfindliche Sensorelement eine andere elektrische Kenngröße feuchteabhängig ändert; beispielsweise wären auch resistive Sensorelemente einsetzbar etc..
Daneben können auch in Dickschichttechnik aufgebaute Sensoreinheiten zum Einsatz kommen oder aber Sensoreinheiten, die Halbleitermaterialien verwenden. Auch als Substratmaterialien können natürlich Alternativen zu Glas in Betracht kommen; hierzu zählen etwa Keramiken oder aber Silizium usw..
Es existieren im Rahmen der vorliegenden Erfindung somit eine Reihe von Ausgestaltungsmöglichkeiten neben dem oben beschriebenen Ausführungsbeispiel.

## Patentansprüche

1. Anordnung zur Feuchtemessung, bestehend aus einer Sensoreinheit mit einem feuchteempfindlichem Sensorelement und einem Trägerelement mit folgenden Merkmalen:
- das Trägerelement (2) besitzt eine Ausnehmung (6), über der die Sensoreinheit (1) angeordnet ist, wobei das feuchteempfindliche Sensorelement (1.1) in Richtung der Ausnehmung (6) orientiert ist,
- das Trägerelement (2) sowie die Sensoreinheit (1) weisen elektrische Kontaktierungsbereiche (1.2a, 1.2b) auf, wobei die sensorseitigen Kontaktierungsbereiche auf derjenigen Seite der Sensoreinheit (1) angeordnet sind, die dem Trägerelement (2) zugewandt ist,
**dadurch gekennzeichnet, dass**
das Trägerelement (2) zumindest in einem Teilbereich benachbart zur Sensoreinheit (1) mit einer Beschichtung (3) versehen ist, die wenig - - Feuchtigkeit aufnimmt und/oder abgibt.

2. Anordnung nach Anspruch 1, **dadurch gekennzeichnet, dass** die komplette Oberfläche des Trägerelementes (2) mit Ausnahme der Kontaktierungsbereiche (1.2a, 1.2b) mit der Beschichtung (3) versehen ist.

3. Anordnung nach Anspruch 1, **dadurch gekennzeichnet, dass** als Material für die Beschichtung (3) Gold gewählt ist.

4. Anordnung nach Anspruch 1, **dadurch gekennzeichnet, dass** als Material für die Beschichtung (3) Kupfer gewählt ist.

5. Anordnung nach Anspruch 1, **dadurch gekennzeichnet, dass** auch die Kantenbereiche des Trägerelementes (2) im Bereich der Ausnehmung (6) mit der Beschichtung (3) überzogen sind.

6. Anordnung nach Anspruch 1, **dadurch gekennzeichnet, dass** sämtliche Kantenbereiche des Trägerelementes (2) mit der Beschichtung (3) überzogen sind.

7. Anordnung nach Anspruch 1, **dadurch gekennzeichnet, dass** die Sensoreinheit (1) ein Trägersubstrat (1.3) umfaßt, auf dem ein in Dünnschichttechnik ausgebildetes Sensorelement (1.1) sowie elektrische Kontaktierungsbereiche (1.2a, 1.2b) angeordnet sind.

8. Anordnung nach Anspruch 7, **dadurch gekennzeichnet, dass** das Sensorelement (1.1) eine Grundelektrode (1.1c), eine darüber angeordnete Polymerschicht (1.1b) sowie eine darauf angeordnete feuchtedurchlässige Deckelektrode (1.1a) umfaßt.

9. Anordnung nach Anspruch 1, **dadurch gekennzeichnet, dass** das Sensorelement (1.1) in Abhängigkeit der jeweiligen Feuchte eine elektrische Kenngröße ändert.

10. Anordnung nach Anspruch 1, **dadurch gekennzeichnet, dass** das Trägerelement (2) als ein- oder mehrlagige Leiterplatte ausgebildet ist.

11. Anordnung nach Anspruch 1, **dadurch gekennzeichnet, dass** die Größe der Ausnehmung (6) im Trägerelement (2) größer als die Grundfläche der dem Trägerelement (2) zugewandten Sensoreinheit (1) gewählt ist.

12. Anordnung nach Anspruch 1, **dadurch gekennzeichnet, dass** auf dem Trägerelement (2) desweiteren elektrische Leiterbahnen (5a, 5b) angeordnet sind, die über die Kontaktierungsbereiche des Trägerelementes (2) das Sensorelement (1.1) mit nachgeordneten weiteren elektrischen Bauelementen verbinden.

13. Anordnung nach Anspruch 12, **dadurch gekennzeichnet, dass** die Leiterbahnen (5a, 5b) auf dem Trägerelement (2) ebenfalls aus dem Material der Beschichtung (3) bestehen, aber von der Beschichtung (3) in den sonstigen Bereichen des Trägerelementes (2) isoliert sind.

14. Anordnung nach Anspruch 12, **dadurch gekennzeichnet, dass** die Oberfläche des Trägerelementes (2) bis auf die Kontaktierungsbereiche ganzflächig mit einem Lötstoplack (4) überzogen ist, der eine geringe Feuchteaufnahme aufweist.

15. Anordnung nach Anspruch 1, **dadurch gekennzeichnet, dass** zwischen den Kontaktierungsbereichen (1.2a, 1.2b) des Sensorelementes (1.1) und den Kontaktierungsbereichen des Trägerelementes (2) elektrisch leitfähige Verbindungselemente (7a, 7b) angeordnet sind.

## Claims

1. An arrangement for measuring humidity, consisting of a sensor unit with a sensor element sensitive to moisture and a support element, with the following features:
- the support element (2) has a recess (6), over which the sensor unit (1) is arranged, wherein the moisture-sensitive sensor element(1.1) is orientated in the direction of the recess (6),
- the support element (2) and the sensor unit (1) have electric contact regions (1.2a, 1.2b), wherein the contact regions on the sensor side are arranged on that side of the sensor unit (1) which faces the support element (2),
**characterized in that** the support element (2) is provided at least in a partial region adjacent to the sensor unit (1) with a coating (3) which takes up and/or gives off little moisture.

2. An arrangement according to claim 1, **characterized in that** the complete surface of the support element (2) except for the contact regions (1.2a, 1.2b) is provided with the coating (3).

3. An arrangement according to claim 1, **characterized in that** gold is selected as the material for the coating (3).

4. An arrangement according to claim 1, **characterized in that** copper is selected as the material for the coating (3).

5. An arrangement according to claim 1, **characterized in that** the edge regions of the support element (2) in the region of the recess (6) are also coated with the coating (3).

6. An arrangement according to claim 1, **characterized in that** all edge regions of the support element (2) are provided with the coating (3).

7. An arrangement according to claim 1, **characterized in that** the sensor unit (1) comprises a supporting substrate (1,3), on which a sensor element (1.1) formed by thin film technology and electric contact regions (1.2a, 1.2b) are arranged.

8. An arrangement according to claim 7, **characterized in that** the sensor element (1.1) comprises a base electrode (1.1c), a polymer layer (1.1b) disposed thereon and a covering electrode (1. 1a) which is permeable to moisture disposed thereon.

9. An arrangement according to claim 1, **characterized in that** the sensor element (1.1) alters a characteristic electrical value in dependence on the existing humidity.

10. An arrangement according to claim 1, **characterized in that** the support element (2) is in the form of a single or multi-layer circuit board.

11. An arrangement according to claim 1, **characterized in that** the size of the recess (6) in the support element (2) is greater than the base area of the sensor unit (1) facing the support element (2).

12. An arrangement according to claim 1, **characterized in that** electrical conductor tracks (5a, 5b) are further disposed on the support element (2) and connect the sensor element (1.1) to following further electrical components via the contact regions of the support element (2).

13. An arrangement according to claim 12, **characterized in that** the conductor tracks (5a, 5b) on the support element (2) also consist of the material of the coating (3) but are insulated from the coating (3) in the other regions of the support element (2).

14. An arrangement according to claim 12, **characterized in that** the surface of the support element (2) is coated overall, except for the contact regions, with a solder stop lacquer (4) which has a small tale-up of moisture.

15. An arrangement according to claim 1, **characterized in that** electrically conductive connecting elements (7a, 7b) are arranged between the contact regions (1.2a, 1.2b) of the sensor element (1.1) and the contact regions of the support element (2).

## Revendications

1. Système de mesure de l'humidité, formé d'une unité de capteur avec un élément capteur sensible à l'humidité et d'un élément support, présentant les caractéristiques suivantes :
· l'élément support (2) est pourvu d'un évidement (6), au-dessus duquel est disposée l'unité de capteur (1), l'élément capteur (1.1) sensible à l'humidité étant orienté en direction de l'évidement (6),
· l'élément support (2) ainsi que l'unité de capteur (1) présentent des zones de contact (1.2a, 1.2b) électrique, les zones de contact côté capteur étant disposées sur la face de l'unité de capteur (1) qui est tournée vers l'élément support (2).
**caractérisé en ce que**
l'élément support (2), au moins dans une zone partielle voisine de l'unité de capteur (1), est pourvu d'un revêtement (3) qui n'absorbe et/ou ne cède que de faibles quantités d'humidité.

2. Système selon la revendication 1, **caractérisé en ce que** la totalité de la surface de l'élément support (2), à l'exception des zones de contact (1.2a, 1.2b), est pourvue du revêtement.

3. Système selon la revendication 1, **caractérisé en ce qu'**on utilise de l'or comme matériau de revêtement (3).

4. Système selon la revendication 1, **caractérisé en ce qu'**on utilise du cuivre comme matériau de revêtement (3).

5. Système selon la revendication 1, **caractérisé en ce que** les bords de l'élément support (2), dans la région de l'évidement (6), sont également recouverts par le revêtement (3).

6. Système selon la revendication 1, **caractérisé en ce que** tous les bords de l'élément support (2) sont recouverts du revêtement (3).

7. Système selon la revendication 1, **caractérisé en ce que** l'unité de capteur (1) comprend un substrat formant support (1.3), sur lequel sont disposés un élément capteur (1.1) formé selon la technique des couches minces, ainsi que des zones contact (1.2a, 1.2b) électrique.

8. Système selon la revendication 7, **caractérisé en ce que** l'élément capteur (1.1) comprend une électrode de base (1.1c), une couche de polymère (1.1b) ainsi qu'une électrode de couverture (1.1a) perméable à l'humidité disposée sur le tout.

9. Système selon la revendication 1, **caractérisé en ce que** l'élément capteur (1.1) fait varier une grandeur caractéristique électrique en fonction de l'humidité présente.

10. Système selon la revendication 1, **caractérisé en ce que** l'élément support (2) est conformé en plaquette à circuit imprimé à une plusieurs couches.

11. Système selon la revendication 1, **caractérisé en ce que** la dimension de l'évidement (6) dans l'élément support (2) est plus grande que la surface de base de l'unité de capteur (1) tournée vers l'élément support (2).

12. Système selon la revendication 1, **caractérisé en ce que** sur l'élément support (2) sont en outre disposées des pistes conductrices (5a, 5b), qui relient l'élément capteur (1.1) à des composants électriques subordonnés par l'intermédiaire des zones de contact de l'élément support (2).

13. Système selon la revendication 12, **caractérisé en ce que** sur les pistes conductrices (5a, 5b) sur l'élément support (2) sont elles aussi réalisées dans le matériau du revêtement (3), mais sont isolées du revêtement (3) dans les autres zones de l'élément support (2).

14. Système selon la revendication 12, **caractérisé en ce que** la surface de l'élément support (2), à l'exception des zones de contact, est entièrement recouverte d'un vernis de masquage (4) qui présente un faible degré d'absorption de l'humidité.

15. Système selon la revendication 1, **caractérisé en ce que** des éléments de liaison (7a, 7b) électro-conducteurs sont disposés entre les zones de contact (1.2a, 1.2b) de l'élément capteur (1.1) et les zones de contact de l'élément support (2).
